# EUROPÄISCHE PATENTSCHRIFT

(11) **EP 1 528 963 B1**
(45) Veröffentlichungstag und Bekanntmachung des Hinweises auf die Patenterteilung: **02.05.2007**
(21) Anmeldenummer: 03732233.6
(22) Anmeldetag: 19.05.2003
(51) Int. Cl.: B21K 1/06, E05F 15/16, H02K 7/08

(54) **VERFAHREN UND VORRICHTUNG ZUM HERSTELLEN EINER WELLE MIT ANLAUFKUPPEN**
METHOD AND DEVICE FOR PRODUCING A SHAFT COMPRISING STOP CAPS
PROCEDE ET DISPOSITIF DE FABRICATION D'UN ARBRE COMPORTANT DES CALOTTES D'APPUI

(30) Priorität: 02.08.2002 DE 10235365
(43) Veröffentlichungstag der Anmeldung: 11.05.2005
(73) Patentinhaber: ROBERT BOSCH GMBH, 70442 Stuttgart (DE)
(72) Erfinder: FAUTH, Lothar, 77815 Buehl (DE)
(86) Internationale Anmeldenummer: PCT/DE2003/001599
(87) Internationale Veröffentlichungsnummer: WO 2004/018122

(56) Entgegenhaltungen:
- WO-A-01/65668
- US-A- 5 127 253
- US-A- 5 845 527

## Beschreibung

### Stand der Technik

Die Erfindung betrifft ein Verfahren zum Herstellen einer Welle mit Anlaufkuppen sowie eine Vorrichtung zur Herstellung einer solchen Welle.

Mit der WO 01/65 668 ist eine Vorrichtung bekannt geworden, die beispielsweise zum Verschieben von Fensterscheiben, Schiebdächer oder Sitzen eingesetzt wird. Um ein unerwünschtes Längsspiel der Ankerwelle zu vermeiden, wird dort vorgeschlagen, an zumindest einer der Stirnseiten ein Dämpfgummi in eine Ausnehmung des Gehäuses einzupressen. Die Ankerwelle weist an einer ihrer Stirnseiten eine Anlaufkuppe auf, die sich gegen eine Anlaufscheibe abstützt, die wiederum gegen das Dämpfgummi gepresst wird.

Eine solche Anlaufkuppe wird normalerweise vor dem Zusammenbau des Elektromotors mittels Drehen oder Schleifen in spannender Bearbeitung an der Stirnseite der Ankerwelle gefertigt. Anschließend wird die Anlaufkuppe poliert, um eine hohe Oberflächenqualität zu erzielen und anschließend gehärtet, damit die Anlaufkuppe bei der Montage des Elektromotors nicht beschädigt wird. Dieses Verfahren ist sehr arbeits- und kostenintensiv.

Mit der US-A-5,127,253, auf der der Oberbegriff des Anspruchs 1 basiert, ist ein Verfahren zur Herstellung von Wellen mittels Kaltumformung bekannt geworden, wobei an einer Stirnfläche eine gewölbte Anlaufkuppe angeformt wird. Das Ausgangsmaterial wird dabei in ein Presswerkzeug eingelegt und durch Pressen eine Welle mit unterschiedlichen Durchmessern ausgebildet.

### Vorteile der Erfindung

Das erfindungsgemäße Verfahren mit den Merkmalen des Anspruchs 1 hat den Vorteil, dass beim Anformen einer Anlaufkuppe mittels Kaltumformung in einem Arbeitsgang eine hochwertige und verschleißfeste Oberfläche geschaffen wird. Auf die Prozessschritte Polieren und Härten kann komplett verzichtet werden, da einerseits die Oberfläche mittels Materialverdrängungen in einem Arbeitsgang erzeugt wird, und andererseits dieser Verfahrensschritt günstiger Weise nach der Montage des Ankers durchgeführt werden kann.

Durch die in den Unteransprüchen aufgeführten Merkmale sind vorteilhafte Weiterbildungen des Verfahrens nach Anspruch 1 möglich. Herstellungstechnisch ist es besonders einfach, die Materialumformung mittels eines Rollier-Verfahrens durchzuführen, bei dem sich ein rotierendes Rollwerkzeug auf der Welle abwälzt. Dadurch kann eine sehr maßgenaue, rotationssymmetrische Anlaufkuppe hergestellt werden. Außerdem wird durch das Abrollen des Werkzeugs eine lange Werkzeugstandzeit und eine glatte Werkstückoberfläche erzielt.

Zur Herstellung der Anlaufkuppe in einer Montagelinie ist es vorteilhaft, die Welle mit einem Greifer festzuhalten und eine rotierende Umformrolle mit einer axialen Arbeitsfläche anzustellen. Durch das Verkippen der Achse der Umformrolle gegenüber der Wellenachse wird dann an der Stirnseite der Welle ein Radius angeformt.

Die Materialverformung findet hierbei während dem Verkippen der Umformrolle auf einer spiralförmigen Linie statt, sodass mit einer zunehmenden Verkippung der Werkstoff der Welle kontinuierlich in radialer und axialer Richtung verdrängt wird. Dieser kontinuierliche Fließvorgang erzeugt eine sehr glatte und harte Oberfläche der Anlaufkuppe.

Durch die Wahl des Kreuzungspunktes der Wellenachse mit der Achse der Umformrolle beim Verkippen derselben, kann der Radius der Anlaufkuppe entsprechend den Anforderungen der Axiallagerung der Welle angefertigt werden. So können mit einer Arbeitsfläche der Umformrolle beliebige Radien angeformt werden.

Vor der Montage der Ankerwelle an deren Stirnseite eine Phase, wodurch in Verbindung mit dem Andrückkraft der Umformrolle gegen die Welle der Durchmesser der Anlaufkuppe vorgegeben werden kann. Die Phase gewährleistet, dass das Material der Welle bei dessen Umformung ausweichen kann, wodurch das Umformvolumen und die Umformzeit reduziert werden.

Günstig ist es, die Anlaufkuppe erst in einem fortgeschrittenen Montagestadium des Elektromotors durchzuführen, nachdem schon verschiedene Bauteile auf der Ankerwelle fixiert sind, da dann die Oberfläche der Anlaufkuppe bei der weiteren Montage nicht mehr beschädigt wird.

Andererseits ist es von Vorteil, die Anlaufkuppe vor dem Rollen einer Schnecke auf der Welle anzuformen, da dann die Schnecke bei der Aufnahme in den Umformkopf der Anlaufkuppen-Fertigung oder beim Fixieren der Ankerwelle nicht beschädigt werden kann.

Die erfindungsgemäße Vorrichtung zum Verstellen von beweglichen Teilen im Kraftfahrzeug mit den Merkmalen des unabhängigen Anspruchs 9 hat den Vorteil, dass mit den mittels einer Umformrolle angeformten Anlaufkuppen eine kostengünstige und über lange Standzeiten verschleißfeste axiale Lagerung der Ankerwelle mit einer Oberflächenrauheit der Anlaufkuppe kleiner als 1 Mikrometer realisiert ist.

Die erfindungsgemäße Vorrichtung zum Herstellen einer erfindungsgemäßen Welle mit den Merkmalen des unabhängigen Anspruchs 10 hat den Vorteil, dass diese durch das axiale Verstellen und das Verkippen der Umformrolle gegenüber der Drehachse verfahrenstechnisch günstig in eine Montagelinie integriert werden kann.

### Zeichnung

In der Zeichnung sind Ausführungsbeispiele der erfindungsgemäßen Vorrichtungen dargestellt und in der nachfolgenden Beschreibung näher erläutert. Es zeigen
Fig. 1 eine Vorrichtung zum Verstellen von beweglich angeordneten Teilen in Schnitt,
Fig. 2 eine Vorrichtung zum Herstellen einer Welle nach dem erfindungsgemäßen Verfahren und
Fig. 3 einen vergrößerten Ausschnitt der Anlaufkuppe aus Fig. 2.

### Beschreibung der Ausführungsbeispiele

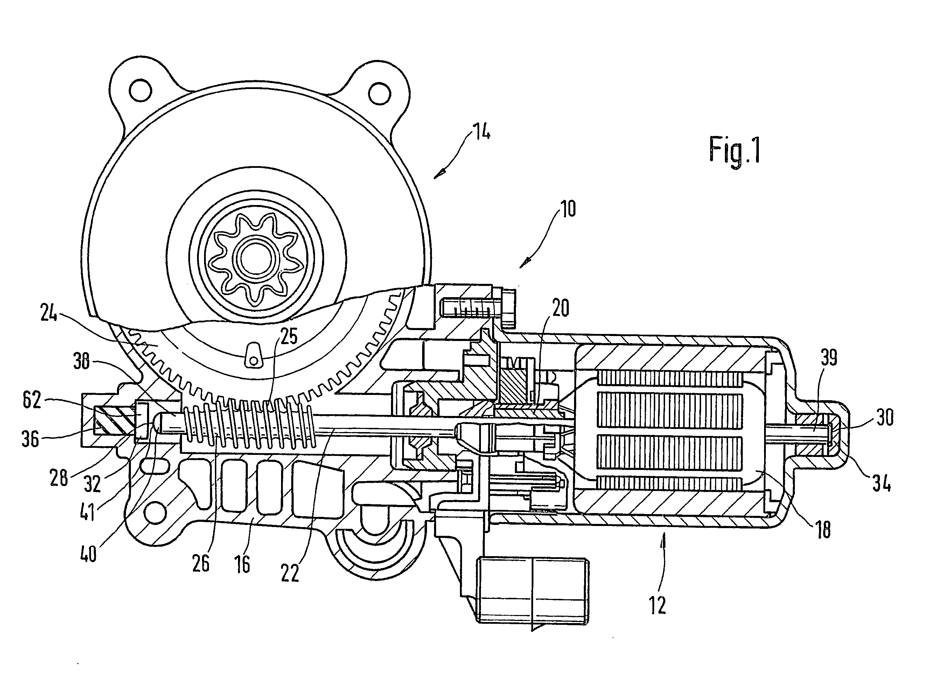

In Fig. 1 ist ein Verstellantrieb 10 dargestellt, mit einem Motor 12 und einem ein Getriebe 14 umgebenden mehrteiligen Gehäuse 16. Der Motor 12 ist elektrisch kommmutiert und weist ein Anker 18, einen Kommutator 20 und eine mehrfach gelagerte Ankerwelle 22 auf, die sich bis in den Bereich des Getriebes 14 erstreckt. Auf der Ankerwelle 22 ist eine Schnecke 26 angeordnet, die mit einem Schneckenrad 24 über eine Verzahnung 25 kommuniziert. An den Stirnflächen 28 und 30 der Ankerwelle 22 ist diese in Längsrichtung über Anlaufscheiben 32 und 34, sowie über ein Dämpfgummi 36 am Gehäuse 16, bzw. einem Teil derselben abgestützt. An einem Ende 38 der Ankerwelle 22 ist mittels Materialverdrängung eine Anlaufkuppe 40 angeformt. Der Radius 42 der Anlaufkuppe 40 bestimmt die Größe der Fläche, mit der die Ankerwelle 22 gegen die Anlaufscheibe 32 gepresst wird. Je geringer diese Fläche ist, desto geringer sind die Reibungsverluste, jedoch nimmt der Verschleiß mit sinkender Anlauffläche zu. Der Radius 42 der Anlaufkuppe 40 wird daher derart festgelegt, dass ein guter Kompromiss zwischen einer geringen Reibung und einem geringen Verschleiß erzielt wird. Außerdem wird über den Radius 42 eine solch große Kuppenhöhe der Anlaufkuppe 40 gewählt, dass sich während der gesamten Lebensdauer die Anlaufkuppe 40 nicht so tief in die - meist aus Kunststoff gefertigte - Anlaufscheibe 32 eingräbt, dass Kuppenränder 41, die den Radius 42 der Anlaufkuppe 40 begrenzen, die Anlaufscheibe 32 berühren.

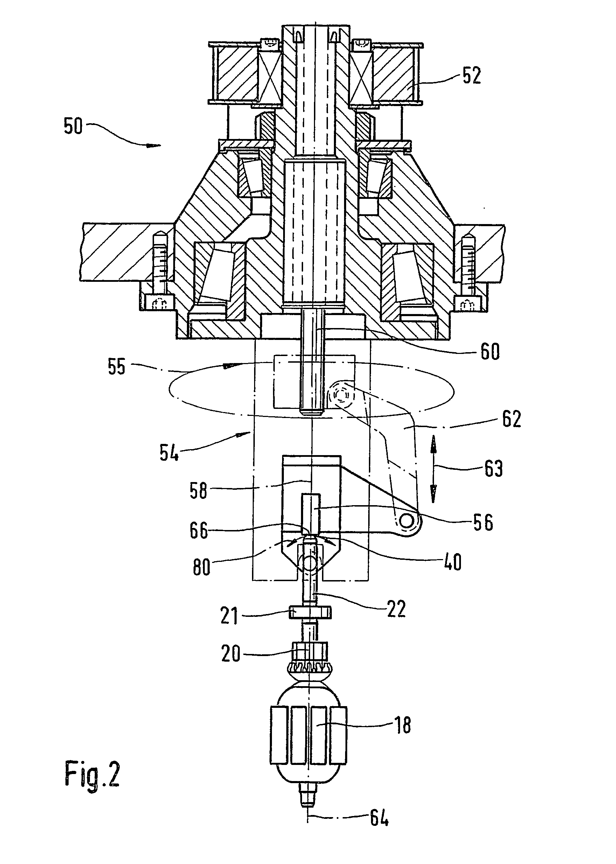

In Figur 2 ist das erfindungsgemäße Verfahren anhand einer Vorrichtung zur Herstellung einer Welle 22 dargestellt. Auf der Welle 22 sind schon mehrere Bauteile 44, wie z. B. ein Anker 18, ein Kommutator 20 oder ein Ringmagnet 21 fertig montiert, bevor die Ankerwelle 22 beispielsweise mittels eines nicht näher dargestellten - beispielsweise eine drehbar gelagerte Führungshülse zur Aufnahme der Welle 22 aufweisenden - Greifers gehalten wird. Die Umformvorrichtung 50 besteht im wesentlichen aus einem Antrieb 52, der einen Umformkopf 54 rotieren lässt. Im Umformkopf 54 ist eine Umformrolle 56 auf einer zentralen Drehachse 58 angeordnet. Der Umformkopf 56 kann mittels einer Verstelleinheit 60 in axialer Richtung 63 zugestellt werden, und über einen Umlenkhebel 62 die Umformrolle 56 gegenüber der zentralen Drehachse 58 des Umformkopfs 54 verkippt werden. In diesem Ausführungsbeispiel liegt die Drehachse 58 deckungsgleich mit einer Achse 64 der Ankerwelle 22. Während der Umformkopf 54 um die Drehachse 58 rotiert, wird die Umformrolle 56 gegen die Stirnseite 28 der Ankerwelle 22 angestellt und die Umformrolle 56 gegenüber der Achse 64 der Ankerwelle 22 verkippt. Dabei berührt die Umformrolle 56 mit einer axialen Arbeitsfläche 66 die Ankerwelle 22 in einem punktförmigen Umformbereich 68, der während der Rotation entsprechend Pfeilrichtung 55 und dem Verkippen der Arbeitsfläche 66 gemäß Pfeilrichtung 80 auf einer spiralförmigen Linie verläuft. Hierbei wird der Werkstoff der Ankerwelle 22 von der Achse 64 aus radial nach außen und axial zum Anker 18 hin verdrängt, wodurch eine gewölbte Oberfläche einer Anlaufkuppe 40 an die Ankerwelle 22 angeformt wird. Die Kaltumformung des Werkstoffs führt zu einer Verdichtung des Oberflächematerials und damit zu einer Oberflächenrauheit von weniger als 1 Mikrometer.

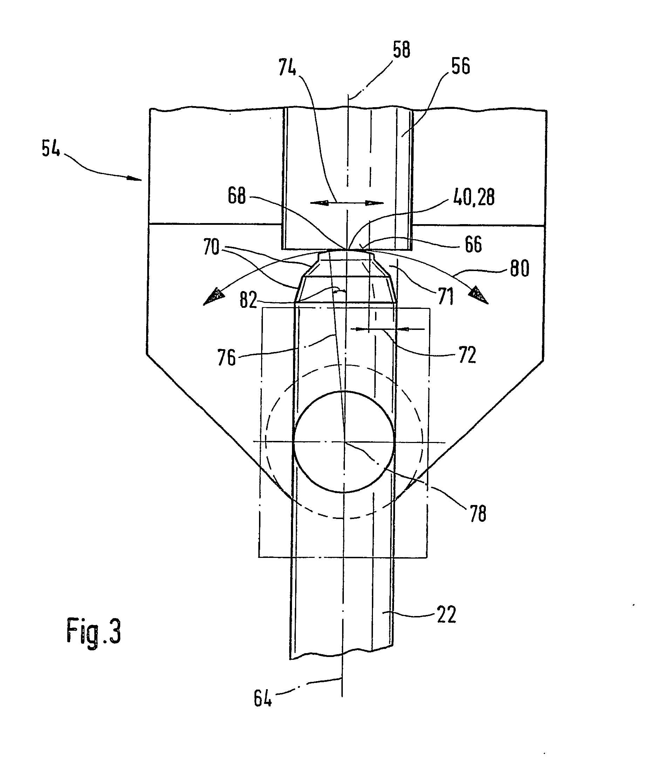

Figur 3 zeigt einen vergrößerten Ausschnitt der Anlaufkuppe 40 aus Figur 2, wobei an die Ankerwelle 22 vor dem Anformen einer Anlaufkuppe eine Phase 70 gefertigt ist, die einen entsprechenden Freiraum 71 für die Materialverformung durch die Umformrolle 56 zulässt. Die Phase 70 ist in Ausführungsbeispiel zweistufig ausgeführt, kann aber ebenso gut als eine durchgehende Phase 70 gefertigt sein. Die radiale Ausdehnung 72 der Phase 70 legt innerhalb gewissen Grenzen in Verbindung mit dem aufzubringenden Anpressdruck der Umformrolle 56 einen Durchmesser 74 - von beispielsweise 3 bis 4 Millimeter - der Anlaufkuppe 40 fest, da das Material nicht beliebig weit in den Freiraum 71 der Phase 70 zurückgeformt werden kann. Die Wölbung der Oberfläche der Anlaufkuppe 40 weist einen Radius 76 auf, der durch das Verkippen der axialen Arbeitsfläche 66 der Umformrolle 56 um einen Verkippungspunkt 78 auf der Achse 64 der Ankerwelle 22 entsprechend Pfeilrichtung 80 erzeugt wird. Die Umformrolle 56 wird dabei gemäß der Pfeilrichtung 80 beispielsweise über einen Winkelbereich 82 von -5° bis +20° verkippt. Der Radius 76 ist gewöhnlich kleiner, als der Schwenkradius der Umformrolle 56, da die Welle 22 während des Umformprozesses unter axialer Spannung steht und permanent nachgedrückt wird.

In einer weiteren Variation des Verfahrens ist eine rotierende Umformrolle 56 ortsfest angeordnet, und die Stirnfläche 28 der Welle 22 wird gegen die Arbeitsfläche 66 der Umformrolle 56 gepresst und um einen Verkippwinkel 82 gegenüber der Wellenachse 64 verkippt.

In einer weiteren Alternative des Verfahrens rotiert die Welle 22 um ihre Achse 64 und wird gegen die feststehende Arbeitsfläche 66 der Umformrolle 56 angestellt und entweder die Ankerwelle 22 oder die Umformrolle 56 um einen Verkippwinkel 82 verkippt.

Bei diesen Varianten des erfindungsgemäßen Verfahrens kommt es darauf an, dass die Stirnfläche 28 der Welle 22 gegenüber eine Arbeitsfläche 66 rotiert, und diese beiden Flächen kontinuierlich gegeneinander verkippt werden. Dadurch entsteht mittels Materialverdrängung eine qualitativ hochwertige Oberfläche einer Anlaufkuppe 40, die an einem oder an beiden Enden 38, 39 angeformt werden kann.

Bei einem weiteren Ausführungsbeispiel wird als Verfahren der Materialverdrängung ein gewölbtes Stempelwerkzeug unter Druck gegenüber der Stirnfläche 28, 30 der Welle 22 bewegt, wobei dies nicht notwendigerweise eine reine Rotationsbewegung sein muss.

Vorzugsweise wird das erfindungsgemäße Verfahren für die Herstellung einer elektrischen Getriebe-Antriebseinheit verwendet, ist jedoch nicht auf diese beschränkt.

## Patentansprüche

1. Verfahren zum Herstellen einer Welle (22), insbesondere einer Ankerwelle (22) eines elektromotorischen Antriebs (10), wobei an mindestens einer Stirnfläche (28, 30) der Welle (22) mittels Materialumformung eine gewölbte Anlaufkuppe (40) angeformt wird, die sich an einer axialen Anlauffläche (32, 34) abstützen kann, **dadurch gekennzeichnet, dass** die Materialumformung zum Anformen der Anlaufkuppe (40) mittels einer Umformrolle (56) ausgeführt wird.

2. Verfahren nach Anspruch 1, **dadurch gekennzeichnet, dass** sich eine Arbeitsfläche (66) der Umformrolle (56) und die Stirnfläche (28, 30) der Welle (22) relativ zueinander drehen, die Stirnfläche (28, 30) und die Arbeitsfläche (66) relativ zueinander axial verstellt werden und die Stirnfläche (28, 30) und die Arbeitsfläche (66) relativ zueinander verkippt werden.

3. Verfahren nach Anspruch 2, **dadurch gekennzeichnet, dass** der Werkstoff der Welle (22) axial und/oder radial durch eine variable Zustellung der Stirnfläche (28, 30) gegenüber der Arbeitsfläche (66) zum Fließen gebracht wird, wodurch eine verdichtete, glatte Oberfläche der Anlaufkuppe (40) erzeugt wird.

4. Verfahren nach einem der Ansprüche 2 oder 3, **dadurch gekennzeichnet, dass** an die Anlaufkuppe (40) ein Radius (76) angeformt wird, der durch den Abstand der Arbeitsfläche (66) zu einem Verkippungspunkt (78) auf einer Achse (64) der Welle (22) bestimmt wird.

5. Verfahren nach einem der Ansprüche 1 bis 4, **dadurch gekennzeichnet, dass** vor dem Anformen der mindestens eine Anlaufkuppe (40) mindestens eine Phase (70) an der Welle (22) gefertigt wird.

6. Verfahren nach einem der Ansprüche 1 bis 5, **dadurch gekennzeichnet, dass** zuerst mindestens ein Bauteil (44, 18, 20, 21) - insbesondere ein Anker (18) eines elektromotorischen Antriebs (10) - auf der Welle (22) montiert und danach mindestens eine Anlaufkuppe (40) angeformt wird.

7. Verfahren nach einem der Ansprüche 1 bis 6, **dadurch gekennzeichnet, dass** das Anformen der mindestens einen Anlaufkuppe (40) vor dem Anformen einer Schnecke (26) auf der Welle (22) erfolgt.

8. Vorrichtung zum Herstellen einer Welle (22), insbesondere einer Ankerwelle (22) eines elektromotorischen Antriebs (10), die nach einem der vorhergehenden Verfahrensansprüchen hergestellt ist, wobei die Vorrichtung (50) einen um eine Drehachse (58) rotierenden Umformkopf (54) mit einer Umformrolle (56) und mindestens eine Verstelleinheit (60, 62) zum axialen und/oder radialen Verstellen und Verkippen der Umformrolle (56) gegenüber der Drehachse (58) aufweist.

## Claims

1. Method for producing a shaft (22), in particular an armature shaft (22) of an electromotive drive (10), a curved stop cap (40) being integrally formed on at least one end face (28, 30) of the shaft (22) by means of material deformation, which stop cap can be supported on an axial stop face (32, 34), **characterized in that** the material deformation is designed so as to integrally form the stop cap (40) by means of a deformation roller (56).

2. Method according to Claim 1, **characterized in that** a working face (66) of the deformation roller (56) and the end face (28, 30) of the shaft (22) rotate in relation to one another, the end face (28, 30) and the working face (66) are adjusted axially in relation to one another, and the end face (28, 30) and the working face (66) are tilted in relation to one another.

3. Method according to Claim 2, **characterized in that** the material of the shaft (22) is caused to flow axially and/or radially by means of the end face (28, 30) being advanced in variable fashion with respect to the working face (66), as a result of which a compressed, smooth surface of the stop cap (40) is produced.

4. Method according to either of Claims 2 and 3, **characterized in that** a radius (76) is integrally formed on the stop cap (40), which radius is determined by the distance between the working face (66) and a tilting point (78) on an axis (64) of the shaft (22).

5. Method according to one of Claims 1 to 4, **characterized in that**, before the at least one stop cap (40) is integrally formed, at least one bevel (70) is produced on the shaft (22).

6. Method according to one of Claims 1 to 5, **characterized in that**, first, at least one component (44, 18, 20, 21) - in particular an armature (18) of an electromotive drive (10) - is mounted on the shaft (22), and then at least one stop cap (40) is integrally formed.

7. Method according to one of Claims 1 to 6, **characterized in that** the integral forming of the at least one stop cap (40) takes place before a worm (26) is integrally formed on the shaft (22).

8. Device for producing a shaft (22), in particular an armature shaft (22) of an electromotive drive (10), which is produced according to one of the preceding method claims, the device (50) having a deformation head (54), which rotates about an axis of rotation (58) and has a deformation roller (56), and at least one adjusting unit (60, 62) for axially and/or radially adjusting and tilting the deformation roller (56) with respect to the axis of rotation (58).

## Revendications

1. Procédé de fabrication d'un arbre (22), en particulier d'un arbre d'induit (22) d'un entraînement à moteur électrique (10), selon lequel on forme dans au moins une face frontale (28, 30) de l'arbre (22), par déformation de la matière, au moins une calotte de circulation courbe (40) bombée qui peut s'appuyer sur portée de circulation axiale (32, 34),
**caractérisé en ce que**
la déformation de la matière pour former la calotte de circulation (40) est effectuée au moyen d'un galet de formage (56).

2. Procédé selon la revendication 1,
**caractérisé en ce qu'**
une face de travail (66) du galet de formage (56) et la face frontale (28, 30) de l'arbre (22) tournent l'une par rapport à l'autre, la face frontale (28, 30) et la face de travail (66) sont déplacées axialement l'une par rapport à l'autre et la face frontale (28, 30) et la face de travail (66) sont inclinées l'une par rapport à l'autre.

3. Procédé selon la revendication 2,
**caractérisé en ce que**
la matière de l'arbre (22) est amenée à l'écoulement axial et/ou radial par une approche variable de la face frontale (28, 30) par rapport à la face de travail (66), ce qui produit une surface lisse compactée de la calotte de circulation (40).

4. Procédé selon l'une des revendications 2 ou 3,
**caractérisé en ce que**
sur la calotte de circulation (40) on forme un rayon (76) déterminé par la distance entre la face de travail (66) et un point de basculement (78) sur un axe (64) de l'arbre (22).

5. Procédé selon l'une des revendications 1 à 4,
**caractérisé en ce qu'**
on réalise au moins un chanfrein (70) sur l'arbre (22) avant de former au moins une calotte de circulation (40).

6. Procédé selon l'une des revendications 1 à 5,
**caractérisé en ce qu'**
on monte d'abord au moins un composant (44, 18, 20, 21) - en particulier un induit (18) d'un entraînement à moteur électrique (10) - sur l'arbre (22) et on forme ensuite au moins une calotte de circulation (40).

7. Procédé selon l'une des revendications 1 à 6,
**caractérisé en ce qu'**
on effectue le formage d'au moins une calotte de circulation (40) avant de former une vis sans fin (26) sur l'arbre (22).

8. Dispositif de fabrication d'un arbre (22), en particulier d'un arbre d'induit (22) d'un entraînement à moteur électrique (10), fabriqué selon l'une quelconque des revendications de procédé qui précèdent, le dispositif (50) comprenant une tête de formage (54) tournant autour d'un axe de rotation (58), avec un galet de formage (56) et au moins une unité de déplacement (60, 62) pour le déplacement axial et/ou radial et l'inclinaison du galet de formage (56) par rapport à l'axe de rotation (58).
